# EUROPÄISCHE PATENTANMELDUNG

(11) **EP 4 342 826 A1**
(43) Veröffentlichungstag der Anmeldung: **27.03.2024**
(21) Anmeldenummer: 22306378.5
(22) Anmeldetag: 20.09.2022
(51) Int. Cl.: B65G 43/00, G06N 3/08

(54) **VERFAHREN ZUR ERSTELLUNG EINER STEUERUNG FÜR EIN TRANSPORTSYSTEM**

(71) Anmelder: Schneider Electric Industries SAS, 92500 Rueil-Malmaison (FR)
(72) Erfinder: FURTH, Sebastian, 97950 Großrinderfeld (DE); SCHOLZ, Martin, 63110 Rotgau (DE); UHL, André, 97295 Waldbrunn (DE)
(74) Vertreter: Manitz Finsterwald Patent- und Rechtsanwaltspartnerschaft mbB

(57) **Zusammenfassung**

Die Erfindung betrifft ein Verfahren zur Erstellung einer Steuerung für ein Transportsystem, wobei das Transportsystem eine Führungsbahn und eine Vielzahl von unabhängig entlang der Führungsbahn bewegbaren Transportelementen umfasst. Das Transportsystem weist insbesondere ein Multi-Carrier-System auf. Das Verfahren umfasst die folgenden Schritte:
- Erfassen des Aufbaus des Transportsystems,
- Erzeugen eines Modells des Transportsystems aus dem erfassten Aufbau des Transportsystems,
- Festlegen von Randbedingungen in dem Modell, welche gewünschte Bewegungen der Transportelemente entlang der Führungsbahn beschreiben,
- Trainieren eines KI-Moduls mittels Reinforcement Learning, wobei das KI-Modul eine Modellsteuerung durchführt, um die gewünschten Bewegungen der Transportelemente zu bewirken.

## Beschreibung

Die vorliegende Erfindung betrifft ein Verfahren zur Erstellung einer Steuerung für ein Transportsystem, wobei das Transportsystem eine Führungsbahn und eine Vielzahl von unabhängig entlang der Führungsbahn bewegbaren Transportelementen umfasst. Das Transportsystem umfasst insbesondere ein Multi-Carrier-System.

Bei derartigen Transportsysteme mit einer Vielzahl von Transportelementen, sogenannten Läufern, können die Transportelemente entlang der Führungsbahn mittels Linearmotoren bewegt werden. Die Transportelemente sind dabei einzeln und unabhängig voneinander bewegbar, so dass Multi-Carrier-Systeme die Möglichkeit schaffen, flexibel an verschiedene industrielle Prozesse angepasst zu werden und insbesondere auch auf Veränderungen in einem industriellen Prozess flexibel reagieren können.

Solche Transportsysteme können daher in sehr unterschiedlichen Bereichen eingesetzt werden, beispielsweise zum Bearbeiten von Werkstücken, zum Befüllen von Flaschen oder zum Verpacken von Lebensmittelartikeln. Die für den jeweiligen industriellen Prozess notwendigen Verarbeitungsschritte werden dabei üblicherweise an sogenannten Stationen des Transportsystems durchgeführt. Je nach Komplexität des industriellen Prozesses müssen die einzelnen Transportelemente zu unterschiedlichen Zeiten und mit unterschiedlicher Beladung an den verschiedenen Stationen ankommen und auch in den Stationen verweilen. Teilweise sind auch Interaktionen zwischen den einzelnen Transportelementen notwendig, um beispielsweise zu transportierende Gegenstände zwischen zwei Transportelementen zu klemmen.

Es ist daher ersichtlich, dass die Programmierung eines solchen Transportsystems einen erheblichen Aufwand nach sich zieht, insbesondere wenn eine Vielzahl von Transportelementen koordiniert werden muss, um z.B. Kollisionen zwischen den Transportelementen zu verhindern und zugleich einen möglichst effizienten Betrieb des Transportsystems zu gestatten.

Herkömmlicherweise besteht also das Problem, dass sehr viel Zeit und Aufwand für die Erstellung der Programmierung der Steueralgorithmen, also mithin für die Erstellung der Steuerung des Transportsystems, aufgewendet werden muss.

Es ist daher die der Erfindung zugrundeliegende Aufgabe, ein Verfahren zur Erstellung einer Steuerung (d.h. der Steueralgorithmen und/oder der Steuersoftware) für ein Transportsystem anzugeben, welches den Zeitaufwand und die Komplexität bei der Erstellung für einen Bediener reduziert.

Diese Aufgabe wird durch ein Verfahren gemäß Anspruch 1 gelöst.

Das erfindungsgemäße Verfahren dient zur Erstellung einer Steuerung (d.h. eines Steueralgorithmus und/oder einer Steuersoftware) für ein Transportsystem, wobei das Transportsystem eine Führungsbahn und eine Vielzahl von unabhängig entlang der Führungsbahn bewegbaren Transportelementen umfasst, wobei das Transportsystem insbesondere ein Multi-Carrier-System aufweist. Das erfindungsgemäße Verfahren umfasst die folgenden Schritte:
- Erfassen des Aufbaus des Transportsystems,
- Erzeugen eines Modells des Transportsystems aus dem erfassten Aufbau des Transportsystems,
- Festlegen von Randbedingungen in dem Modell, welche gewünschte Bewegungen der Transportelemente entlang der Führungsbahn beschreiben,
- Trainieren eines KI-Moduls mittels Reinforcement Learning, wobei das KI-Modul eine Modellsteuerung (des Modells) durchführt, um die gewünschten Bewegungen der Transportelemente (in dem Modell) zu bewirken.

Anders ausgedrückt wird erfindungsgemäß also ein virtuelles Modell des Transportsystems geschaffen, wobei die Randbedingungen angeben, wie sich die Transportelemente später im realen Betrieb des Transportsystems verhalten sollen. Mit dem Modell und den Randbedingungen kann nun das KI-Modul durch Reinforcement Learning, d.h. letztlich durch Versuch und Irrtum, lernen, wie die Transportelemente in dem Transportsystem bewegt werden müssen, um den Anforderungen der Randbedingungen zu genügen. Das Modell liefert dem KI-Modul dabei jeweils Rückmeldung, ob von dem KI-Modul durchgeführte Aktionen zu dem gewünschten Verhalten der Transportelemente geführt haben oder nicht.

Kurz gesagt, erlernt das KI-Modul selbständig die korrekte Steuerung der Transportelemente in dem Transportsystem und kann damit bevorzugt später zur tatsächlichen Steuerung eines realen Transportsystems eingesetzt werden. Dadurch, dass Details der Steuerung selbständig durch das KI-Modul erlernt werden, müssen von einem Bediener lediglich das Modell des Transportsystems und die Randbedingungen erzeugt werden, was im Vergleich zur herkömmlichen Programmierung eines Transportsystems mit einem stark verringerten Zeitaufwand für den Bediener einhergeht und die Komplexität für den Bediener deutlich reduziert.

Nachfolgend werden noch weitere Aspekte der Erfindung ausgeführt.

Die Führungsbahn des Transportsystems kann insbesondere eine geschlossene Bahn bilden, so dass es sich bei der Führungsbahn um eine Endlosbahn handeln kann. Die Führungsbahn kann bevorzugt aus Linearmotoren zusammengesetzt sein, welche Elektromagneten umfassen, wobei die Elektromagneten die Transportelemente durch Erzeugung von Magnetfeldern mittels in den Transportelementen angeordneten Permanentmagneten entlang der Führungsbahn antreiben. Die Transportelemente sind bevorzugt einzeln und unabhängig voneinander steuerbar und bewegbar.

Das Erfassen des Aufbaus des Transportsystems kann beispielsweise durch Messung und/oder visuelles Erfassen des realen Transportsystems erfolgen. So können beispielsweise beim Erfassen die Längen der geraden Stücke der Führungsbahn, die Kurvenradien, die Längen der Kurvenstücke der Führungsbahn, die Positionen der Stationen entlang der Führungsbahn und/oder die Größe der Stationen erfasst werden. Das Erfassen des Aufbaus kann aber auch aus einem Plan heraus (beispielsweise aus einem CAD-Plan) erfolgen. Beim Erfassen des Aufbaus kann auch ermittelt werden, wie viele Transportelemente das Transportsystem umfasst, d.h. wie viele Transportelemente gleichzeitig entlang der Führungsbahn angeordnet sind.

Das aus dem erfassten Aufbau erzeugte Modell ist ein virtuelles Modell, wird also in einem Computer erzeugt und ausgeführt und ist beispielsweise ein Digital Twin des Transportsystems und/oder eine Physik-Simulation. In dem Modell werden die von dem KI-Modul beim Training vorgegebenen Befehle ausgeführt und die Auswirkungen der Befehle ermittelt. Zu den Auswirkungen kann beispielsweise gehören, dass eine Transporteinheit korrekt an einer Station ankommt oder dass eine Transporteinheit mit einer zweiten Transporteinheit zusammenstößt und somit eine Kollision erfolgt. Die Auswirkungen können von dem Modell an das KI-Modul ausgegeben werden.

Die Randbedingungen geben an, wie sich die Transporteinheiten später, d.h. nach dem Training, bewegen sollen. Als Randbedingung kann beispielsweise angegeben werden, dass eine Transporteinheit zunächst eine erste Station anfährt, dort 500 Millisekunden verweilt, anschließend eine zweite Station anfährt und dort 700 Millisekunden verweilt. Als zusätzliche Randbedingung kann beispielsweise angegeben sein, dass zu jeweils einem Zeitpunkt nur immer ein Transportelement in der ersten Station vorhanden sein darf, wohingegen in der zweiten Station immer gleichzeitig mindestens drei Transportelemente vorhanden sein müssen. Die Randbedingungen können weiterhin auch angeben, wann und wo mehrere Transportelemente zusammenwirken müssen, um beispielsweise größere Objekte zu bewegen oder einen zu transportierenden Gegenstand zwischen zwei Transportelementen zum Transport zu klemmen. Durch die Angabe lediglich der Randbedingungen besteht der Vorteil, dass nur abstrakt das Ziel angegeben werden muss, wie die Transportelemente sich letztlich bewegen sollen. Es muss nicht durch einen Bediener überlegt werden, wie das Ziel durch Programmcode erreicht werden kann.

Beim Trainieren des KI-Moduls mittels Reinforcement Learning (es ist ebenfalls auch Deep Reinforcement Learning möglich) wird eine positive Belohnung ("Reward") vergeben, beispielsweise wenn eine Bewegung einer Transporteinheit im Modell mit den gewünschten Bewegungen und damit mit den Randbedingungen übereinstimmt. Falls das KI-Modul beim Training Fehler macht, die beispielsweise zu einer Kollision von Transporteinheiten führen, kann eine negative Belohnung vergeben werden. Anhand der Belohnung kann das KI-Modul also durch "Trial and Error" herausfinden, wie die Transporteinheiten zu bewegen sind. Werden die Transporteinheiten wunschgemäß bewegt, so wird die Belohnung maximiert.

Um das gewünschte Verhalten herauszufinden, wird während des Trainings von dem KI-Modul wiederholt eine Steuerung des Modells (d.h. die Modellsteuerung) durchgeführt, um in dem Modell virtuell die Transporteinheiten zu bewegen und die entsprechende Reaktion des Modells abzuwarten. Anhand der Reaktion des Modells kann dann das KI-Modul jeweils anhand der erhaltenen Belohnung angepasst werden, beispielsweise durch Änderung von Gewichtungsfaktoren innerhalb des KI-Moduls, wie später noch detaillierter ausgeführt wird.

Grundsätzlich versteht sich, dass die Erfindung nicht auf Multi-Carrier beschränkt ist, sondern für beliebige industrielle Systeme mit sich bewegenden Transportelementen anwendbar ist.

Sämtliche hierin genannten Schritte, die die Mitwirkung eines Bedieners benötigen, können beispielsweise in einem Graphischen Benutzerinterface (einer GUI) ausgeführt werden. In der GUI kann der Benutzer z.B. die Randbedingungen festlegen oder den Trainingsfortschritt begutachten.

Vorteilhafte Weiterbildungen der Erfindung sind der Beschreibung, den Figuren sowie den Unteransprüchen zu entnehmen.

Gemäß einer ersten Ausführungsform weist das KI-Modul zumindest einen Agenten auf, wobei der Agent oder die Agenten jeweils ein Set von Aktionen für die Modellsteuerung umfassen und der Agent oder die Agenten beim Trainieren des KI-Moduls die Aktionen einsetzen, um die gewünschten Bewegungen der Transportelemente zu erreichen. Die Aktionen können also zu (virtuellen) Reaktionen im Modell führen, beispielsweise kann durch eine Aktion ein Transportelement bewegt werden. Im Modell wird dann simuliert und/oder überprüft, ob die Aktion zu einer gewünschten Bewegung führt oder ob die Aktion beispielsweise eine Kollision mit einem anderen Transportelement herbeiführt. Je nach Resultat der Aktion kann dann eine positive oder negative Belohnung vergeben werden.

Gemäß einer weiteren Ausführungsform werden in dem Modell die Auswirkungen der Aktionen ermittelt, beispielsweise simuliert, wobei aus den Auswirkungen eine Belohnung bestimmt wird. Wie oben bereits ausgeführt, kann dann anhand der Belohnung eine entsprechende Veränderung des KI-Moduls vorgenommen werden.

Gemäß einer weiteren Ausführungsform wird die Auswirkung der Aktionen dem zumindest einen Agenten als Beobachtung (sogenannte Observation) übermittelt, wobei insbesondere auch die Belohnung dem zumindest einen Agenten übermittelt wird. Nach der Simulation der Aktion kann die Auswirkung also im Modell ermittelt werden, wodurch ein neuer Zustand des Modells des Transportsystems erzeugt wird. Ein solcher Zustand wird auch als State bezeichnet. In dem Zustand können beispielsweise die Positionen und/oder Geschwindigkeiten und/oder Kräfte und/oder Beladungszustände der Transporteinheiten für einen jeweiligen Zeitpunkt enthalten sein. Aus dem Zustand bzw. aus der Auswirkung kann dann eine Belohnung ermittelt werden, wie oben bereits erläutert. Durch die Übermittlung der Auswirkungen in Form der Beobachtung an den Agenten weiß der Agent, was durch seine vorhergehende Aktion oder seine vorhergehenden Aktionen geschehen ist. Der Agent kann anhand der Belohnung lernen und sein Verhalten anpassen, also beispielsweise Aktionen mit negativer Belohnung in Zukunft vermeiden oder Aktionen mit positiver Belohnung wiederholt einsetzen. Der Agent kann somit lernen, welche Aktion wann und wie eingesetzt werden sollte.

Gemäß einer weiteren Ausführungsform umfasst das KI-Modul ein neuronales Netzwerk, wobei das neuronale Netzwerk beim Trainieren anhand der Belohnung, insbesondere wiederholt, geändert wird. Nach vordefinierten Trainingsschritten können anhand der Belohnung beispielsweise Gewichtungsfaktoren in dem neuronalen Netz geändert werden. Das neuronale Netz kann Knoten (sogenannte Nodes) in verschiedenen Schichten (sogenannten Layern) umfassen. Beispielsweise kann das neuronale Netz in z.B. 2 bis 5 Schichten jeweils 10 bis 40 Knoten umfassen. Die vorgenannten Gewichtungsfaktoren können beispielsweise ein Verhalten der Knoten bestimmen und/oder verändern. Die Veränderung des neuronalen Netzwerks anhand der Belohnung kann aber auch die Verschaltung der Knoten und/oder die Anzahl der Knoten und/oder Schichten verändern.

Gemäß einer weiteren Ausführungsform werden bei der Modellsteuerung eine oder mehrere der folgenden Aktionen ausgeführt:
- Anweisen eines Transportelements, zu einer definierten Station zu fahren,
- Anweisen eines Transportelements, zu warten,
- Anweisen eines Transportelements, seine Bewegung zu stoppen,
- Anweisen eines Transportelements, zu einer definierten Position zu fahren.

Sämtliche hierin genannten Aktionen können zu dem vorgenannten Set von Aktionen des bzw. der Agenten gehören.

Es versteht sich, dass jeweils ein genau definiertes Transportelement angesprochen wird, um eine der Aktionen auszuführen. Wie genau die Bewegung und/oder Fahrt des Transportelements erfolgt, kann in dem Modell festgelegt sein, beispielsweise basierend auf der zulässigen maximalen Beschleunigung und/oder der zulässigen maximalen Geschwindigkeit des realen Transportsystems. Die Simulation in dem Modell kann dann entsprechend erfolgen.

Gemäß einer weiteren Ausführungsform sind die bei der Modellsteuerung ausführbaren Aktionen, bevorzugt innerhalb des KI-Moduls, auf mehrere Agenten aufgeteilt, wobei bevorzugt
- ein Stations-Agent das Anweisen eines Transportelements zu einer definierten Station zu fahren und/oder das Anweisen eines Transportelements zu warten, ausführen kann,
- ein Transportelements-Agent das Anweisen, insbesondere nur, eines Transportelements eine Bewegung zu stoppen und/oder das Anweisen, insbesondere nur, eines Transportelements zu einer definierten Position zu fahren, ausführen kann, und/oder
- ein Aufsichts-Agent zumindest eines von allen Transportelementen anweisen kann, eine Bewegung zu stoppen und/oder zumindest eines von allen Transportelementen anweisen kann, zu einer definierten Position zu fahren.

Die Stations-Agenten sind jeweils, insbesondere genau, einer Station zugeordnet. Die Stations-Agenten können bevorzugt nur Aktionen für die Transportelemente vornehmen, die gerade, d.h. im momentanen Zustand des Modells, in der Station des Stations-Agenten sind. Die Transportelements-Agenten sind bevorzugt jeweils genau einem Transportelement zugeordnet und können nur für genau dieses Transportelement Aktionen ausführen. Der Aufsichts-Agent kann alle Transportelemente bewegen und/oder für alle Transportelemente Aktionen ausführen.

Die Agenten besitzen untereinander bevorzugt eine Hierarchie, dies bedeutet in der Hierarchie höher angeordnete Agenten können Aktionen niedrigerer Agenten zumindest temporär überschreiben. Bevorzugt kann der Transportelements-Agent in der Hierarchie am höchsten angeordnet sein, gefolgt vom Stations-Agenten. Der Aufsichts-Agent kann in der Hierarchie am niedrigsten angeordnet sein. Rein beispielhaft kann der Aufsichts-Agent eine Aktion ausführen, die eines der Transportelemente an eine bestimmte Position an der Führungsbahn schickt. Wenn aber der diesem Transportelement zugeordnete Transportelements-Agent eine drohende Kollision erkennt, kann der Transportelements-Agent das Transportelement beispielsweise temporär stoppen, um die drohende Kollision abzuwenden.

Gemäß einer weiteren Ausführungsform werden beim Trainieren des KI-Moduls Belohnungswerte ermittelt, wobei positive Belohnungswerte für
- das Bewegen eines Transportelements in die gewünschte Station und/oder
- das erfolgreiche Beladen oder Entladen eines Transportelements erzeugt werden.

Negative Belohnungswerte können für
- das Bewegen eines Transportelements in eine falsche Station und/oder
- eine Kollision zweier Transportelemente erzeugt werden.

Es sind auch noch weitere positive Belohnungswerte möglich, beispielsweise dafür dass ein Transportelement gerade in Bewegung ist und/oder dass ein Transportelement in einer Station fertig verarbeitet wurde. Fertig verarbeitet kann beispielsweise bedeuten, dass der Arbeitsschritt der Station erfolgreich z.B. an dem von dem Transportelement transportierten Gegenstand ausgeführt wurde, wobei es sich bei dem Verarbeitungsschritt z.B. um eine mechanische Veränderung oder aber auch das Erzeugen eines Kamerabilds und dergleichen handeln kann. Negative Belohnungswerte können außerdem z.B. für ein fehlgeschlagenes Entladen oder Beladen erzeugt werden. Die positiven als auch die negativen Belohnungswerte können in ihren Beträgen unterschiedlich groß sein, beispielsweise um wichtigeres Verhalten stärker zu belohnen.

Das KI-Modul kann auch mehrmals mit unterschiedlichen Agenten trainiert werden, wobei die Belohnungswerte für unterschiedliche Agenten variiert werden können, um unterschiedliche Schwerpunkte für das gewünschte Verhalten zu setzen. Beispielsweise kann ein positiver Belohnungswert für hohen Durchsatz und/oder Energieeffizienz erzeugt werden, um am Ende eine Steuerung mit hohem Durchsatz oder eine Steuerung mit besonders hoher Energieeffizienz zu erhalten. Ein Kompromiss bzw. eine Kombination aus hohem Durchsatz und hoher Energieeffizienz ist ebenfalls möglich.

Als Algorithmen für das Reinforcement Learning kann das KI-Modul beispielsweise A2C (Advantage Actor Critic), A3C (Asynchronous Advantage Actor Critic), DQM (Deep Q Learning), IMPALA, MARWIL und/oder PPO (Proximal Policy Optimization) einsetzen.

Gemäß einer weiteren Ausführungsform gestattet das Modell ein Ermitteln der Auswirkungen der Modellsteuerung, wobei das Modell bevorzugt eine Physik-Simulation und/oder einen digitalen Zwilling des (realen) Transportsystems umfasst. Wie oben bereits ausgeführt, wird im Modell also beispielsweise simuliert, ob die Bewegungen, die durch Aktionen der Agenten bewirkt wurden, z.B. zu Kollisionen der Transportelemente führen, ob Transportelemente in der jeweils korrekten Station angekommen sind, etc.

Gemäß einer weiteren Ausführungsform werden in dem Modell ein oder mehrere der Folgenden ermittelt:
- Beschleunigungskräfte auf die Transportelemente beim Beschleunigen und/oder Bremsen,
- Zentrifugalkräfte auf die Transportelemente in Kurven der Führungsbahn,
- Reibung auf der Führungsbahn,
- die Anzahl von Transportelementen in zumindest einer Station,
- die Anzahl der verarbeiteten Transportelemente,
- die Anzahl von Transportelementen, die sich gerade zu einer vorbestimmten Station hinbewegen,
- die Anzahl von Transportelementen, die gerade an einer vorbestimmten Station wartet,
- die momentane Position, Zielposition, Geschwindigkeit und/oder Standzeit zumindest eines der Transportelemente,
- den momentanen Verarbeitungszustand zumindest eines der Transportelemente,
- die Leistungsaufnahme des Transportsystems.

Die hierin genannten Werte werden jeweils durch die Aktionen der Agenten verändert. Diese Werte können wiederholt, beispielsweise in festen Zeitabständen, insbesondere jede Millisekunde, jede 0,5 Sekunden oder jede Sekunde, ermittelt werden. Anhand dieser Werte wird dann der Zustand des Modells den Agenten mitgeteilt. Auch der Belohnungswert kann aufgrund dieses Zustands ermittelt werden, insbesondere ebenfalls wiederkehrend, beispielsweise in vorgegebenen Zeitabständen.

Gemäß einer weiteren Ausführungsform werden Änderungen an dem neuronalen Netzwerk wiederholt zu vorbestimmten Zeitpunkten als Checkpoints gespeichert, wobei in einer an das Training anschließenden Evaluierungsphase für zumindest zwei, bevorzugt für die meisten oder alle, der Checkpoints eine Evaluierung durchgeführt wird, um insbesondere dasjenige neuronale Netz, d.h. denjenigen Agenten bzw. denjenigen Zustand des neuronalen Netzwerks, zu ermitteln, welcher bevorzugt die Randbedingungen am besten erfüllt.

Gemäß einer weiteren Ausführungsform wird das KI-Modul nach dem Ende des Trainierens für die tatsächliche Steuerung des Transportsystems eingesetzt. Das Ende des Trainierens kann beispielsweise dadurch angezeigt sein, dass der erzielte Belohnungswert einen vorbestimmten Schwellenwert überschreitet. Dadurch kann deutlich werden, dass das KI-Modul die gewünschten Bewegungen der Transportelemente hinreichend gut erzielt.

Zur tatsächlichen Steuerung des realen Transportsystems kann der Agent auf einer vom Transportsystem separaten Recheneinheit, beispielsweise einem Industrial PC, ausgeführt werden, wobei das Transportsystem selbst beispielsweise eine speicherprogrammierbare Steuerung umfasst, die die Linearmotoren des Transportsystems ansteuert. Die separate Recheneinheit mit dem Agenten kann dann der speicherprogrammierbaren Steuerung über einen Feldbus oder beispielsweise über OPC Unified Architecture (OPC UA) ihre Befehle für Aktionen an die SPS übertragen. Auf der SPS muss dann beispielsweise nur wenig standardisierter Programmcode implementiert werden, welcher die Messwerte von dem realen Transportsystem an die separate Recheneinheit weitergibt und die Befehle der separaten Recheneinheit im realen Transportsystem umsetzt.

Alternativ ist es auch möglich, das trainierte KI-Modul bzw. den trainierten Agenten in einen Steuercode gemäß IEC 61131-3 zu übersetzen, wobei der Steuercode dann direkt auf der speicherprogrammierbaren Steuerung des Transportsystems ausgeführt werden kann.

Weiterer Gegenstand der Erfindung ist ein System zur Erstellung einer Steuerung für ein Transportsystem, wobei das System ein Transportsystem und eine Recheneinrichtung umfasst, wobei das Transportsystem eine Führungsbahn und eine Vielzahl von unabhängig entlang der Führungsbahn bewegbaren Transportelementen umfasst, wobei das Transportsystem insbesondere ein Multi-Carrier-System aufweist. Die Recheneinrichtung ist dazu ausgebildet, die folgenden Verfahrensschritte auszuführen:
- Erfassen des Aufbaus des Transportsystems,
- Erzeugen eines Modells des Transportsystems aus dem erfassten Aufbau des Transportsystems,
- Festlegen von Randbedingungen in dem Modell, welche gewünschte Bewegungen der Transportelemente entlang der Führungsbahn beschreiben,
- Trainieren eines KI-Moduls mittels Reinforcement Learning, wobei das KI-Modul eine Modellsteuerung (des Modells) durchführt, um die gewünschten Bewegungen der Transportelemente (in dem Modell) (mit dem KI-Modul) zu bewirken.

Gemäß einer Weiterbildung des Systems ist die Recheneinrichtung ausgebildet, nach dem Trainieren eine Steuerung des Transportsystems durchzuführen, wie oben genauer erläutert.

Schließlich betrifft die Erfindung ein Computerprogrammprodukt, umfassend Befehle, die bei der Ausführung des Programms durch einen Computer diesen veranlassen, das hierin erläuterte Verfahren und insbesondere das Verfahren nach Anspruch 1 auszuführen.

Nachfolgend wird die Erfindung rein beispielhaft unter Bezugnahme auf die Zeichnungen beschrieben. Es zeigen:
- Fig. 1: ein Transportsystem in perspektivischer Ansicht;
- Fig. 2: perspektivisch einen Kurvenabschnitt des Transportsystems von Fig. 1;
- Fig. 3: das Erfassen des Aufbaus des Transportsystems in einer Software;
- Fig. 4: das Festlegen von Stationen;
- Fig. 5: eine Ansicht eines Belohnungswerts während des Trainierens eines KI-Moduls;
- Fig. 6: eine Visualisierung des Verhaltens der Transportelemente;
- Fig. 7: das Übertragen eines Agenten nach dem Trainieren; und

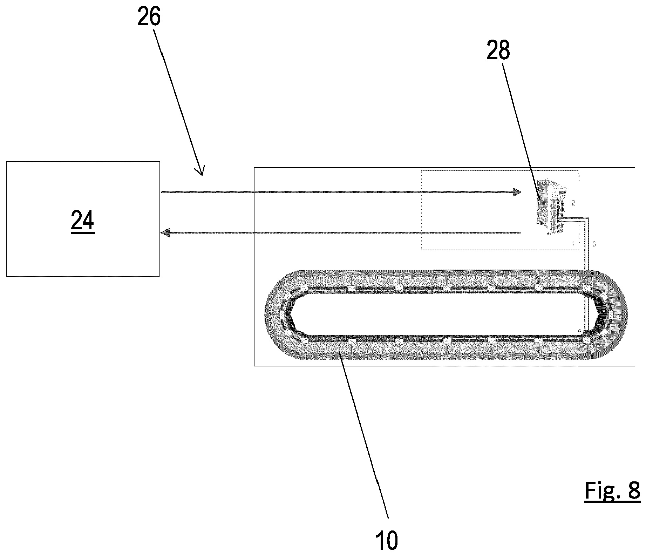

- Fig. 8: die Steuerung des realen Transportsystems mit dem trainierten Agenten.

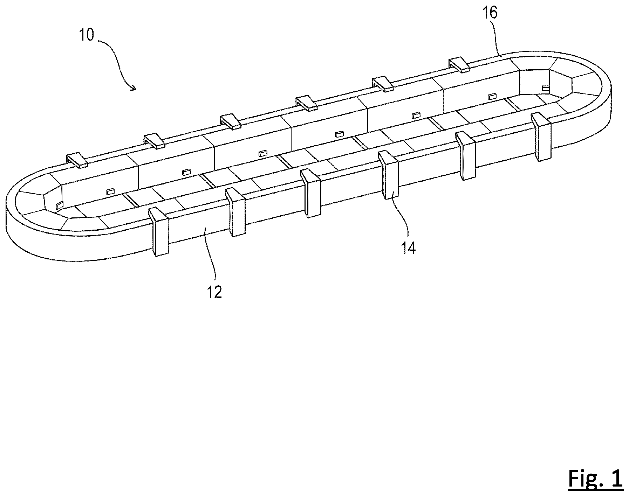

Fig. 1 zeigt ein Transportsystem 10, das als Multi-Carrier-System ausgebildet ist. Das Transportsystem 10 umfasst mehrere Linearmotoren 12, die aneinandergereiht angeordnet sind, so dass eine durchgehende und in diesem Fall umlaufende Bewegung von Läufern 14 (d.h. von Transportelementen) entlang einer Führungsbahn 16 ermöglicht ist. Die Läufer 14 bilden die einzelnen Transportelemente des Transportsystems 10, wobei die Läufer 14 mit Hilfe der Linearmotoren 12 entlang der Führungsbahn 16 unabhängig voneinander bewegt werden können.

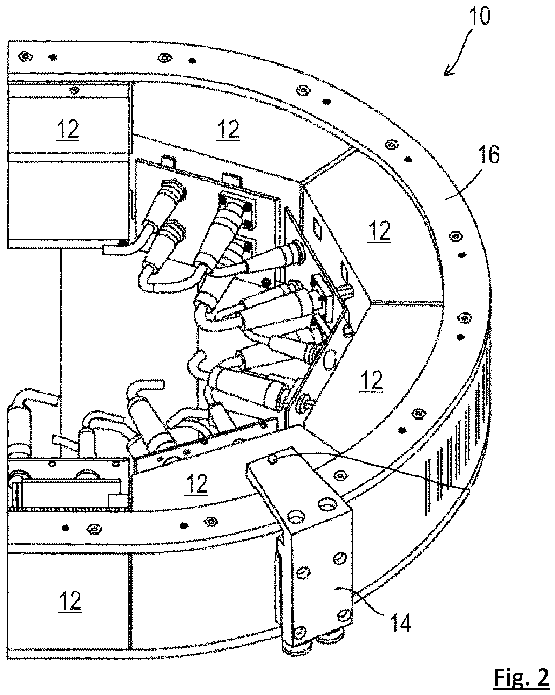

Fig. 2 zeigt einen Kurvenabschnitt des Transportsystems 10 in vergrößerter Ansicht. In Fig. 2 ist lediglich ein Läufer 14 dargestellt, der entlang der Führungsbahn 16 bewegt wird, nämlich über die Linearmotoren 12. Auf der dem Läufer 14 abgewandten Seite der Führungsbahn 16, also innerhalb der Kurve, sind verschiedene elektronische Einrichtungen zur Ansteuerung der Linearmotoren 12 sichtbar.

Die Schritte zur Erstellung einer Steuerung für ein solches Transportsystem 10 sind nun im Folgenden beispielhaft dargestellt.

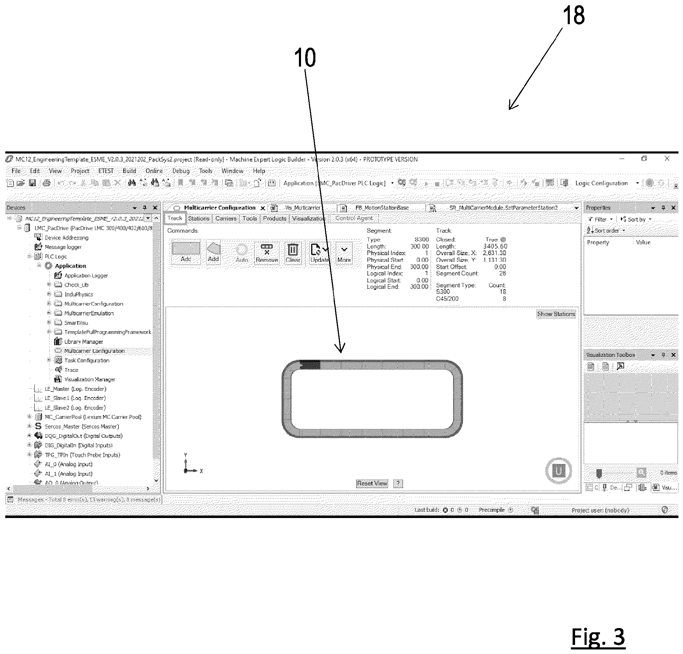

Fig. 3 bis 7 zeigt ein graphisches Benutzerinterface, d.h. eine GUI 18, in welcher ein Bediener sämtliche erforderlichen Schritte durchführen kann.

In Fig. 3 kann der Bediener zunächst die Form und Größe der Führungsbahn 16, d.h. des Transportsystems 10, eingeben oder verändern. Anstelle einer Eingabe durch den Bediener ist auch eine Messung oder eine Extraktion aus beispielsweise CAD-Daten möglich.

Die GUI 18 kann auf einer (nicht gezeigten) Recheneinrichtung ausgeführt sein, auf welcher auch das Training des KI-Moduls durchgeführt wird. Allgemein kann das Training auf derselben Recheneinrichtung ausgeführt werden, auf welcher auch die GUI ausgeführt wird. Alternativ oder zusätzlich ist es auch möglich, das Training auf einer entfernten Recheneinrichtung, z.B. einem High-Performance PC mit GPUs oder in der Cloud, durchzuführen.

Nach dem Festlegen der Form und Größe des Transportsystems 10 kann daraus ein (nicht gezeigtes) virtuelles Modell des Transportsystems 10 auf der Recheneinrichtung erzeugt werden.

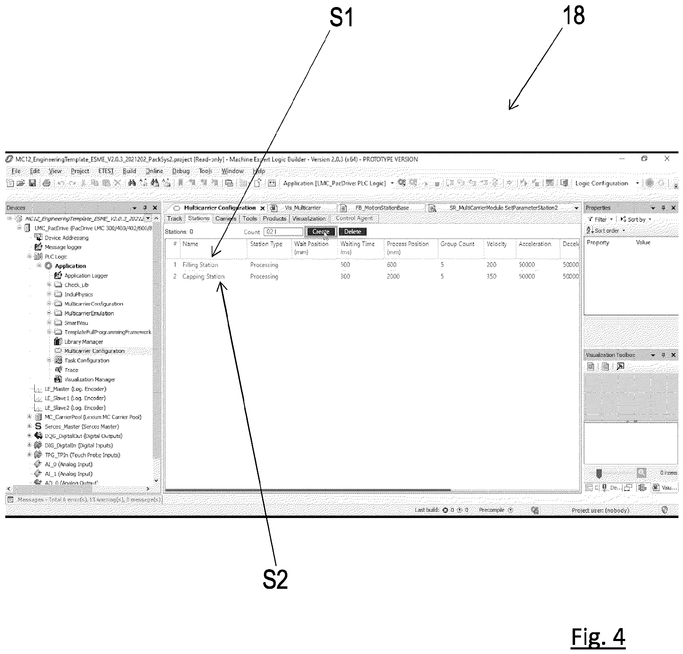

Anschließend kann ein Bediener die entlang der Führungsbahn 16 angeordneten Stationen angeben, wie dies in Fig. 4 gezeigt ist. In Fig. 4 wird beispielhaft von einem Prozess ausgegangen, bei welchem mit Hilfe des Transportsystems 10 Flaschen befüllt und anschließend mit Deckeln versehen werden sollen. Dementsprechend ist in Fig. 4 gezeigt, dass eine "Filling Station" S1 und eine "Capping Station" S2 vorgesehen sind. An der Filling Station S1 sollen die Läufer 14 500 Millisekunden und an der Capping Station S2 300 Millisekunden warten. Die Filling Station S1 befindet sich 600 mm und die Capping Station S2 2000 mm nach einem Startpunkt auf der Führungsbahn 16.

Die Informationen über die Stationen S1, S2 legen somit die Randbedingungen in dem Modell fest, so dass für das Training ersichtlich ist, dass (im hier erläuterten Beispiel) die Läufer 14 jeweils zunächst zu der Filling Station S1 fahren sollen, dort 500 Millisekunden verweilen und anschließend zu der Capping Station S2 weiterfahren und dort 300 Millisekunden verweilen. Danach kann der jeweilige Läufer 14 eine weitere Runde entlang der Führungsbahn fahren.

Nach der Eingabe dieser Randbedingungen kann das Training eines (nicht gezeigten) KI-Moduls gestartet werden. Das KI-Modul bewegt die Läufer 14 zunächst völlig zufällig entlang der Führungsbahn 16 und erhält dafür dann positive oder negative Belohnungen, wie oben näher ausgeführt. Aufgrund der Belohnungen kann das KI-Modul dann erkennen, welche Aktionen gewünscht sind oder nicht. Nach jeweils festgelegten Zeitabschnitten oder einer bestimmten Anzahl von Aktionen wird der jeweilige Belohnungswert für den Agenten des KI-Moduls ermittelt, wobei dann eine Anpassung des neuronalen Netzes des KI-Moduls erfolgt.

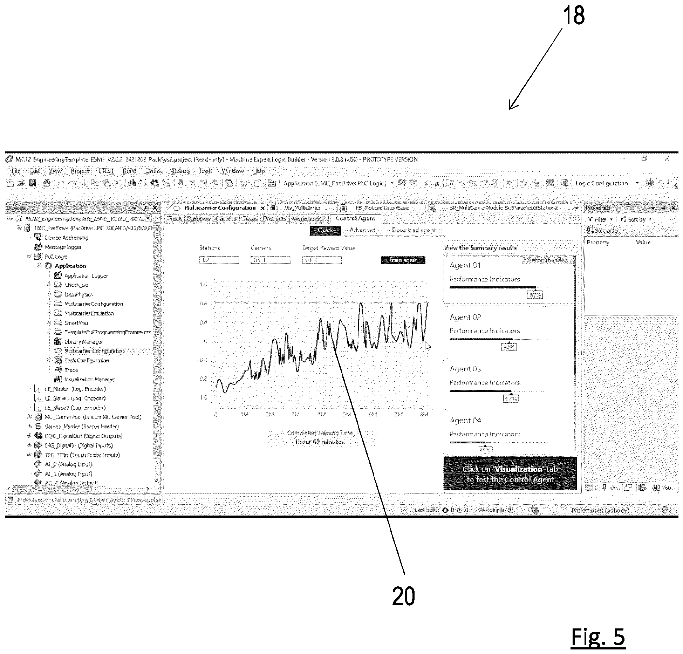

Nach üblicherweise vielen tausend solcher Zyklen steigt der Belohnungswert 20 wie in Fig. 5 dargestellt an und überschreitet letztlich einen Schwellenwert, welcher in Fig 5 als horizontale Linie dargestellt ist. Wird der Schwellenwert erreicht oder überschritten, so ist davon auszugehen, dass das KI-Modul die gewünschten Bewegungen der Läufer 14 hinreichend genau ansteuert, also die Läufer 14 zunächst zur Filling Station S1 fährt, dort für zumindest 500 Millisekunden verweilen lässt und dann zur Capping Station S2 fährt, wobei die Läufer 14 dort dann auch für mindestens 300 Millisekunden stehen.

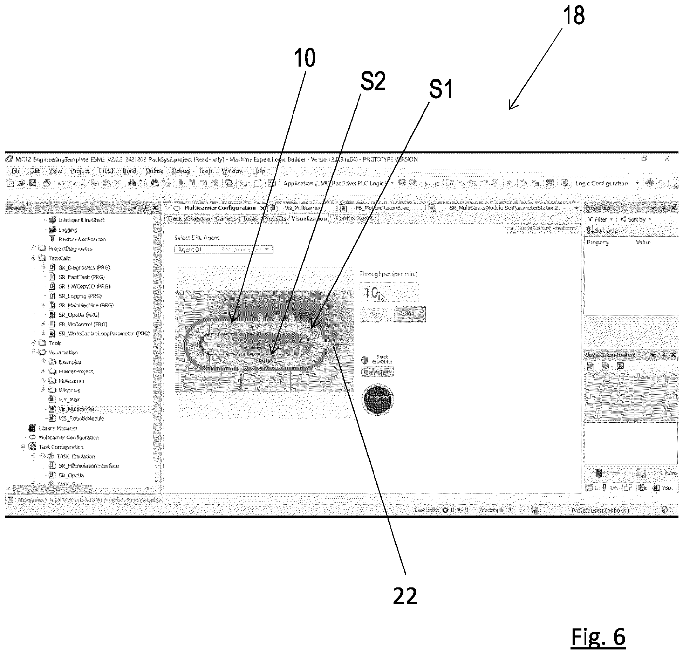

Nach dem Ende des Trainierens kann sich der Benutzer die Bewegungen der Läufer 14 in einer Visualisierung 22 ansehen und auf Korrektheit überprüfen, wie in Fig. 6 dargestellt.

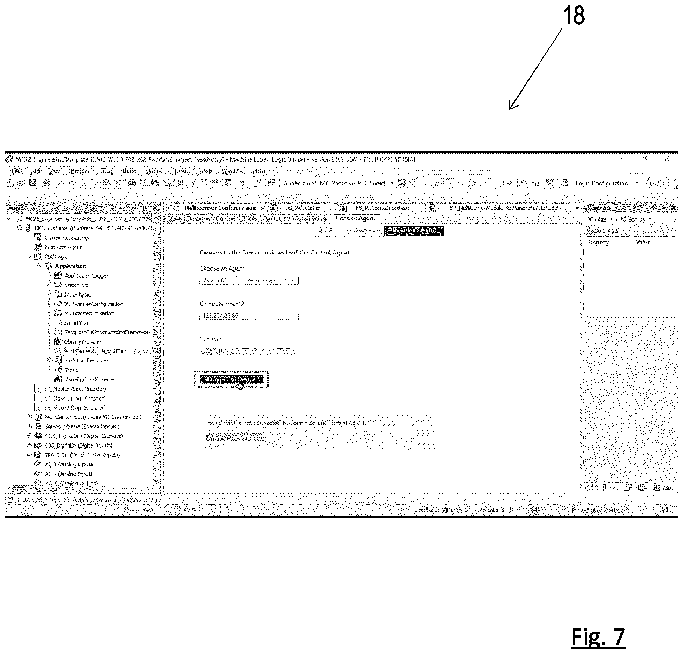

Ist der Bediener mit dem Ergebnis des Trainierens zufrieden, kann, wie in Fig. 7 dargestellt, das trainierte KI-Modul, d.h. der trainierte Agent, auf einen Steuerrechner für das Transportsystem 10 übertragen werden.

Bei dem Steuerrechner kann es sich beispielsweise um einen industriellen PC (iPC) 24 handeln, welcher mittels einer Datenverbindung 26, beispielsweise für OPC UA, mit einer speicherprogrammierbaren Steuerung, SPS, 28 des Transportsystems 10 gekoppelt ist.

Über die Datenverbindung 26 können von dem industriellen PC 24 Befehle für Aktionen an die SPS 28 gesendet werden, wodurch die Läufer 14 des Transportsystems 10 entsprechend der während des Trainierens erlernten Art und Weise entlang der Führungsbahn 16 bewegt werden. Die SPS 28 sendet an den industriellen PC 24 und damit an das KI-Modul die Ist-Zustände, d.h. Messwerte, zurück. Diese Messwerte entsprechen für das KI-Modul den Beobachtungen (Observations), wobei das KI-Modul anhand der Beobachtungen die nächsten Aktionen entsprechend ausführen kann.

Es ist ersichtlich, dass ein Bediener nur wenige kurze Schritte ausführen muss, um eine Steuerung der Läufer 14 in der gewünschten Art und Weise zu erhalten. Ein Erstellen von Programmcode durch einen Menschen ist aufgrund der "selbstlernenden" Eigenschaft des KI-Moduls nicht notwendig. Auf diese Weise wird ein drastischer Zeitgewinn bei der Erstellung von Steuerungssoftware für das Transportsystem 10 erreicht.

### Bezuqszeichenliste

- 10: Transportsystem
- 12: Linearmotor
- 14: Läufer
- 16: Führungsbahn
- 18: GUI
- 20: Belohnungswert
- 22: Visualisierung
- 24: Industrial PC
- 26: Datenverbindung
- 28: SPS

- S1: Filling Station
- S2: Capping Station

## Patentansprüche

1. Verfahren zur Erstellung einer Steuerung für ein Transportsystem (10), wobei das Transportsystem (10) eine Führungsbahn (16) und eine Vielzahl von unabhängig entlang der Führungsbahn (16) bewegbaren Transportelementen (14) umfasst, wobei das Transportsystem (10) insbesondere ein Multi-Carrier-System aufweist,
wobei das Verfahren die folgenden Schritte umfasst:
- Erfassen des Aufbaus des Transportsystems (10),
- Erzeugen eines Modells des Transportsystems (10) aus dem erfassten Aufbau des Transportsystems (10),
- Festlegen von Randbedingungen in dem Modell, welche gewünschte Bewegungen der Transportelemente (14) entlang der Führungsbahn (16) beschreiben,
- Trainieren eines KI-Moduls mittels Reinforcement Learning, wobei das KI-Modul eine Modellsteuerung (des Modells) durchführt, um die gewünschten Bewegungen der Transportelemente (14) (in dem Modell) (mit dem KI-Modul) zu bewirken.

2. Verfahren nach Anspruch 1,
wobei das KI-Modul zumindest einen Agenten aufweist, wobei der Agent oder die Agenten jeweils ein Set von Aktionen für die Modellsteuerung umfassen und der Agent oder die Agenten beim Trainieren des KI-Moduls die Aktionen einsetzen, um die gewünschten Bewegungen der Transportelemente (14) zu erreichen.

3. Verfahren nach Anspruch 2,
wobei in dem Modell die Auswirkungen der Aktionen ermittelt werden, wobei aus den Auswirkungen eine Belohnung bestimmt wird.

4. Verfahren nach Anspruch 3,
wobei die Auswirkung der Aktionen dem zumindest einen Agenten als Beobachtung übermittelt wird, wobei auch die Belohnung dem zumindest einen Agenten übermittelt wird.

5. Verfahren nach zumindest einem der vorstehenden Ansprüche, wobei das KI-Modul ein neuronales Netzwerk umfasst, wobei das neuronale Netzwerk beim Trainieren anhand der Belohnung (wiederholt) geändert wird.

6. Verfahren nach zumindest einem der vorstehenden Ansprüche, wobei bei der Modellsteuerung eine oder mehrere der folgenden Aktionen ausgeführt werden:
- Anweisen eines Transportelements (14) zu einer definierten Station (S1, S2) zu fahren,
- Anweisen eines Transportelements (14) zu warten,
- Anweisen eines Transportelements (14) seine Bewegung zu stoppen,
- Anweisen eines Transportelements (14) zu einer definierten Position zu fahren.

7. Verfahren nach Anspruch 6,
wobei die bei der Modellsteuerung ausführbaren auf mehrere Agenten aufgeteilt sind, wobei bevorzugt
- ein Stations-Agent das Anweisen eines Transportelements (14) zu einer definierten Station (S1, S2) zu fahren und/oder das Anweisen eines Transportelements (14) zu warten, ausführen kann,
- ein Transportelements-Agent das Anweisen (nur) eines Transportelements (14) eine Bewegung zu stoppen und/oder das Anweisen eines Transportelements (14) zu einer definierten Position zu fahren, ausführen kann, und/oder
- ein Aufsichts-Agent zumindest eines von allen Transportelementen (14) anweisen kann, eine Bewegung zu stoppen und/oder zumindest eines von allen Transportelementen (14) anweisen kann zu einer definierten Position zu fahren.

8. Verfahren nach zumindest einem der vorstehenden Ansprüche,
wobei beim Trainieren des KI-Moduls Belohnungswerte (20) ermittelt werden, wobei positive Belohnungswerte (20) für
- das Bewegen eines Transportelements (14) in die gewünschte Station (S1, S2) und/oder
- das Beladen oder Entladen eines Transportelements (14) erzeugt werden, wobei negative Belohnungswerte (20) für
- das Bewegen eines Transportelements (14) in eine falsche Station (S1, S2) und/oder
- eine Kollision zweier Transportelemente (14) erzeugt werden.

9. Verfahren nach zumindest einem der vorstehenden Ansprüche,
wobei das Modell ein Ermitteln der Auswirkungen der Modellsteuerung gestattet, wobei das Modell bevorzugt eine Physik-Simulation und/oder einen digitalen Zwilling des Transportsystems (10) umfasst.

10. Verfahren nach zumindest einem der vorstehenden Ansprüche,
wobei in dem Modell ein oder mehrere der Folgenden ermittelt werden:
- Beschleunigungskräfte auf die Transportelemente (14) beim Beschleunigen und/oder Bremsen,
- Zentrifugalkräfte auf die Transportelemente (14) in Kurven der Führungsbahn (16),
- Reibung auf der Führungsbahn (16),
- die Anzahl von Transportelementen (14) in zumindest einer Station (S1, S2),
- die Anzahl der verarbeiteten Transportelemente (14),
- die Anzahl von Transportelementen (14), die sich gerade zu einer vorbestimmten Station (S1, S2) hinbewegen,
- die Anzahl von Transportelementen (14), die gerade an einer vorbestimmten Station (S1, S2) warten,
- die momentane Position, Zielposition, Geschwindigkeit und/oder Standzeit zumindest eines der Transportelemente (14),
- den momentanen Verarbeitungszustand zumindest eines der Transportelemente (14),
- die Leistungsaufnahme des Transportsystems (10).

11. Verfahren zumindest nach Anspruch 5,
wobei Änderungen an dem neuronalen Netzwerk wiederholt zu vorbestimmten Zeitpunkten als Checkpoints gespeichert werden, wobei in einer an das Training anschließenden Evaluierungsphase für zumindest zwei, bevorzugt für alle, der Checkpoints eine Evaluierung durchgeführt wird, um insbesondere dasjenige neuronale Netz zu ermitteln, welcher die Randbedingungen am besten erfüllt.

12. Verfahren nach zumindest einem der vorstehenden Ansprüche,
wobei das KI-Modul nach dem Ende des Trainierens für die tatsächliche Steuerung des Transportsystems (10) eingesetzt wird.

13. System zur Erstellung einer Steuerung für ein Transportsystem (10), wobei das System ein Transportsystem (10) und eine Recheneinrichtung umfasst, wobei das Transportsystem (10) eine Führungsbahn (16) und eine Vielzahl von unabhängig entlang der Führungsbahn (16) bewegbaren Transportelementen (14) umfasst, wobei das Transportsystem (10) insbesondere ein Multi-Carrier-System aufweist,
wobei die Recheneinrichtung dazu ausgebildet ist, die folgenden Verfahrensschritte auszuführen:
- Erfassen des Aufbaus des Transportsystems (10),
- Erzeugen eines Modells des Transportsystems (10) aus dem erfassten Aufbau des Transportsystems (10),
- Festlegen von Randbedingungen in dem Modell, welche gewünschte Bewegungen der Transportelemente (14) entlang der Führungsbahn (16) beschreiben,
- Trainieren eines KI-Moduls mittels Reinforcement Learning, wobei das KI-Modul eine Modellsteuerung durchführt, um die gewünschten Bewegungen der Transportelemente (14) zu bewirken.

14. System nach Anspruch 13, wobei
die Recheneinrichtung ausgebildet ist, nach dem Trainieren eine Steuerung des Transportsystems (10) durchzuführen.

15. Computerprogrammprodukt, umfassend Befehle, die bei der Ausführung des Programms durch einen Computer diesen veranlassen, das Verfahren nach Anspruch 1 auszuführen.
